# EUROPEAN PATENT SPECIFICATION

(11) **EP 0 874 416 B1**
(45) Date of publication and mention of the grant of the patent: **20.02.2002**
(21) Application number: 98106972.7
(22) Date of filing: 16.04.1998
(51) Int. Cl.: H01R 9/18, H01R 4/38

(54) **"A system for connecting electrical cables to electrical apparatus, in particular, to the starter motor of a motor vehicle"**
Verfahren zum Verbinden von elektrischen Kabeln mit elektrischen Geräten, insbesondere mit Kraftfahrzeuganlasser
Méthode de connexion des câbles électriques à des appareils électriques, en particulier au démarreur d'un véhicule automobile

(30) Priority: 18.04.1997 IT TO970332
(43) Date of publication of application: 28.10.1998
(73) Proprietor: FIAT AUTO S.p.A., 10135 Torino (IT)
(72) Inventor: Spina, Donato, 10100 Torino (IT); Palazzolo, Fabio, 10100 Torino (IT)
(74) Representative: Cerbaro, Elena, Dr.

(56) References cited:
- EP-A- 0 506 624
- DE-C- 191 510
- PATENT ABSTRACTS OF JAPAN vol. 97, no. 6, 30 June 1997 & JP 09 035773 A (DENSO), 7 February 1997

## Description

The present invention concerns a system for connecting electrical cables to electrical apparatus, particularly for connecting a battery cable and an electromagnet excitation cable to the starter motor of a motor vehicle.

It is known to realise the wiring for the starter motor of a motor vehicle by fixing the output cable of a battery to a first terminal of the starter motor itself, and fixing the cable terminal of the electromagnet excitation cable to a separate second terminal isolated from the first.

Two separate terminals are thus required for the above-indicated cables, each of which must be connected to the associated terminal by means of a suitable lock assembly. Connection systems of this type have severaldisadvantages due mainly to the fact that the wiring of the starter motor leads to two separate connection points: these systems are thus difficult to assemble, requiring a relatively high number of manual operations, and they are also relatively costly in that they involve many components; furthermore, the presence of two separate connection terminals can give rise to a notable space problem.

A more effective arrangement is disclosed in EP-A-0506624, which from the other hand presents a main drawback in that neither cable terminals nor associated contacts are electrically isolated from each other.

The object of the present invention is to provide a system for the connection of electrical cables to a terminal of electrical apparatus free from the disadvantages described and, in particular, which is inexpensive, of reduced size and easy to assemble.

This object is achieved by the invention in that it concerns a system for connecting electrical cables to electrical apparatus, in particular, to the starter motor of a motor vehicle, as claimed in claim 1.

The said lock means include a protective element for the said first cable terminal, formed from an insulating material, the said second cable terminal being locked to the said second contact by the said first cable terminal by means of the interposition of the said protective element.

According to a preferred embodiment, the said first contact is constituted by a threaded shaft which projects from a casing of the said apparatus; the said second contact being constituted by a conductive track located on a surface of the said casing, surrounding the said threaded shaft.

In this way, many components forming part of the lock assembly of the electromagnet excitation cable terminal are eliminated in comparison with the known connection systems, as they are incorporated into the single battery cable unit, with a consequent constructional simplification of the system itself and, therefore, a reduction in cost.

Furthermore, the connection system according to the present invention enables simpler and faster mounting operations, contributing to a further reduction in overall production costs.

A preferred embodiment of the invention will now be described, purely by way of non-limitative example and with reference to the accompanying drawings, in which:
Figure 1 is an exploded perspective view of a system for connecting an electrical cable to a terminal of electrical apparatus formed according to the invention; and
Figure 2 is a sectional view of the system of Figure 1, assembled.

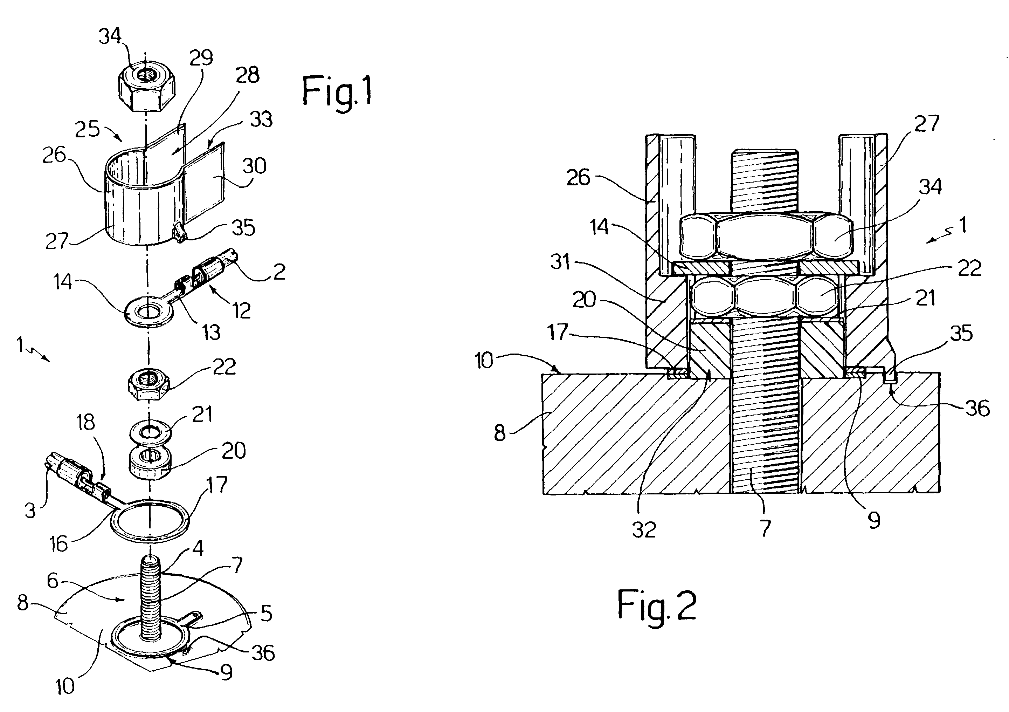

With reference to Figures 1 and 2, the reference numeral 1 generally indicates a system for connecting two electrical cables 2, 3 to associated contacts 4,5 of electrical apparatus, which contacts are separate and electrically isolated from each other: in this particular non-limitative example, the electrical apparatus is a motor vehicle starter motor, known and not shown for simplicity, the cable 3 is an excitation cable of the starter motor electromagnet, connected to the contact 5 which constitutes the output of the winding of the electromagnet, and the electrical cable 2 is the output cable of the motor vehicle battery and is connected to the contact 4, constituted by a conductor terminal 6 of the starter motor itself.

In the non-limitative embodiment illustrated, the conductor terminal 6 is constituted by a threaded shaft 7 made from a conductive material, which projects from a casing 8 of the starter motor; the second contact 5 is, on the other hand, constituted by a conductive track 9 located on a surface 10 of the casing 8 surrounding the threaded shaft 7: as illustrated in Figure 1, the conductive track 8 is annular and concentric about the threaded shaft 7, but could clearly be of different shape.

The battery output cable 2 is provided at one of its ends 12, intended for the electrical connection with the contact 4, with a cable terminal connector 13 shaped like a lug 14, of substantially known type, and fixed firmly to the end 12 of the cable itself. The lug 14 of the cable terminal 3 has an internal diameter substantially equal to that of the threaded shaft 7 such that it can be inserted therein with little radial play.

Similarly, a second cable terminal connector 16, also shaped as a lug 17 and of known type, is fixed firmly to an end 18 of the excitation cable 3 intended for connection to the contact 5. The lug 17 of this second cable terminal 16 has an internal diameter greater than that of the lug 14 of the cable terminal 13, and is such that once the lug 17 has been fitted with some play around the shaft 7, it lies over the conductive track 9 disposed on the surface 10 of the casing 8.

The conductive track 9 is isolated from the threaded shaft 7 by means of a ring 20 formed from an insulating material, for example, a polymeric material, mounted about the shaft 7 and held to the surface 10 of the casing 8 by a washer 21 and a first nut 22 which screws onto the threaded shaft 7. The external diameter of the isolating ring 20 is substantially equal to the internal diameter of the lug 17 of the cable terminal 16, so that it remains radially interposed between the lug 17 and the threaded shaft 7. The washer 21 and the nut 22 also have substantially the same external diameter as the isolating ring 20.

The connection system 1 further includes locking means 25 for locking the cable terminals 13, 16 to the associated contacts 4,5.

In this example, the locking means 25 include a protective element 26 for the cable terminal 13, made from an insulating material, for example, a polymeric material, which also functions, in fact, to protect the cable terminal 13 and the conductive terminal 6, which have no insulation, from accidentally coming into contact with other metal parts. The protective element 26 is formed from a substantially cylindrical portion 27 longitudinally split by a lateral through-hole 28, and having two substantially flat, parallel walls 29, 30 which extend radially from respective edges of this aperture.

The cylindrical portion 27 of the protection element 26 has a base plate 31 provided with a circular through-hole 32 capable of being engaged by the threaded shaft 7 and of surrounding the isolating ring 20, the washer 21 and the bolt 22 once these have been fitted onto the shaft itself such as to abut, together with the base plate 31, against the track 9 and the associated cable terminal 16 possibly coupled thereto.

The cylindrical portion 27 of the protective element 26 thus surrounds the conductor terminal 6, while the parallel walls 29, 30 constitute a guide element 33 for the cable 3.

The locking means 15 of the connection system 1 further includes a second nut 34 which is also being capable of being screwed to the threaded shaft 7, and which has an external diameter greater than that of the first nut 22.

During assembly, after having positioned the terminal 4 by locking the isolating ring 20 against the surface 10 of the casing 8 by means of the first nut 22 and the associated washer 21, the cable terminal 16 of the excitation cable 3 is fitted around the threaded shaft 7 by means of the lug 17; the protective element 26 is then fitted such that the hole 32 formed in the base plate 31 engages the isolating ring 20 and the base plate 31 abuts against the lug 17 of the cable terminal 16.

The cable terminal 13 of the cable 3 is then fitted onto the threaded shaft 7 such that the lug 14 abuts against the base plate 31 of the protective element 26 and against the first nut 22. Finally, the second nut 34 is screwed onto the threaded shaft 7 thus locking the entire connection system 1 into the correct use position.

Locking the nut 34 simultaneously locks both the cable terminals 13 and 16 and the casing 26 to the conductor terminal 6. The cable terminal 16 thus remains locked to the associated contact 5 (constituted by the conductive track 9) by the cable terminal 13, with the protective element 26 interposed; in turn, the cable terminal 13 is locked by the nut 34.

The electrical connection of the cable terminal 16 to the starter motor is ensured by the conductive track 9 against which the cable terminal is held by the locking means 25 and, in particular, by the protective element 26 and the nut 34; however, the electrical connection of the cable terminal 13 is ensured by the threaded shaft 7 and the nuts 22, 34: in fact, the cable terminal 13, as described above, is locked between the two nuts 22, 34 which are screwed onto the threaded shaft 7 and thus maintain the electrical connection between this latter and the cable terminal 13.

The cable terminals 13, 16 are, in turn, electrically isolated from each other by the protective element 26. According to the preferred embodiment illustrated in Figures 1 and 2, in order to impose an angular orientation on the battery output cable 2 that is predetermined with respect to the conductor terminal 6, the protective element 26, including the guide element 33 defined by the walls 29, 30, is also provided with a stop tooth 35: the stop tooth 35 projects radially from an outer lateral surface of the cylindrical portion 27 of the protective element 26, and is capable of engaging a corresponding check element 36 on the casing 8, in this particular example constituted by a seat formed on the surface 10. When, in use, the stop tooth 35 engages the seat 36, the guide element 33 means that the cable 2 remains firmly orientated in the desired direction.

It is clear that many variations may be introduced into the connection system 1 described above: for example, the casing 26 could be provided with an upper closure cap, fixed or removable, or the guide element 33, instead of being integrated into the protective element 26, could be formed as a separate piece.

The connection system according to the invention gives rise to significantly reduced production costs: in fact, the sequential assembly of the two cable terminals 13, 16 of the battery output cable 2 and the electromagnet excitation cable 3 is effected simply and rapidly, reducing assembly times and costs. In addition, in comparison with the currently available systems, the system according to the invention requires fewer components and is therefore less costly.

Finally, it is clear that modifications and variations may be introduced into the connection system described above without by this departing from the ambit of protection as defined in the claims.

## Claims

1. A system (1) for connecting electrical cables to electrical apparatus, in particular to the starter motor of a motor vehicle, including a conductor terminal (6) of the said apparatus, a first cable terminal (13) of a first electrical cable (2) connected to a first contact (4) of the said conductor terminal (6), and a second cable terminal (16) of a second electrical cable (3) connected to a second contact (5) of the said apparatus; the said second contact (5) being disposed close to the said first contact (4); the said connection system (1) further including locking means (25) capable of locking together the said first and second cable terminals (13, 16) to the said conductor terminal (6) against the associated contacts (4, 5); being **characterised by** first isolating means (20) between the said first contact (4) and the said second contact (5) to electrically isolate said contacts (4, 5) from each other; and second isolating means (26) between the said first cable terminal (13) and the said second cable terminal (16) to electrically isolate said cable terminals (13, 16) from each other.

2. A connection system according to Claim 1, **characterised in that** the said locking means (25) include a protective element (26) of the said first cable terminal (13), formed from an insulating material and constituting the said second isolating means; the said second cable terminal (16) being locked to the said second contact (5) by the said first cable terminal (13) with the said protective element (26) interposed between the said first cable terminal (13) and the said second cable terminal (16).

3. A connection system according to Claim 1 or Claim 2, **characterised in that** the said first contact (4) is constituted by a threaded shaft (7) which projects from a casing (8) of the said apparatus; the said second contact (5) being constituted by a conductive track (9) disposed on a surface (10) of the said casing (8) surrounding the said threaded shaft (7).

4. A connection system according to Claim 3, **characterised in that** the said conductive track (9) is shaped as a concentric ring about the said shaft (7) and is connected to an installation outlet of the said apparatus.

5. A connection system according to Claim 3 or Claim 4, **characterised in that** the said first and second cable terminals (13, 16) are shaped to form respective lugs (14, 17) and are fixed firmly to respective ends (12, 18) of the said first and second electrical cables (2, 3) intended for electrical connection with the said first and second contacts (4, 5); the said lug (14) of the first cable terminal (13) having an internal diameter substantially equal to that of the said threaded shaft (7) so that it can be inserted onto this latter with little play; the said lug (17) of the second cable terminal (16) having an internal diameter greater than that of the lug (14) of the said first cable terminal (13) such as to superimpose the said conductive track (9), at least partly, once the said second cable terminal (16) has been fitted about the said threaded shaft (7).

6. A connection system according to Claim 5, **characterised in that** the said protective element (26) includes a substantially cylindrical portion (27) longitudinally spaced from a lateral through-hole (28), the said cylindrical portion (27) having a base plate (31) provided with a through-hole (32) capable of being engaged with play by the said threaded shaft (7), the said base plate (31) being axially interposed between the said first and second cable terminals (13, 16) and capable of electrically isolating them.

7. A connection system according to Claim 5 or Claim 6, **characterised in that** the said lock means (25) include first (22) and second (34) nuts capable of being screwed onto the said threaded shaft (7), the said lug (14) of the first cable terminal (13) being locked between the said nuts (22, 34) so as to be in electrical contact with the said threaded shaft (7).

## Patentansprüche

1. Einrichtung (1) zur Verbindung von elektrischen Kabeln mit einer elektrischen Vorrichtung, insbesondere dem Anlasser eines Kraftfahrzeugs, mit einer Anschlussklemme (6) der Vorrichtung, einem ersten Kabelschuh (13) eines ersten Kabels (2), welches mit einem ersten Kontakt (4) der Anschlussklemme (6) verbunden ist, und einem zweiten Kabelschuh (16) eines zweiten elektrischen Kabels (3), welches mit einem zweiten Kontakt (5) der Vorrichtung verbunden ist, wobei der zweite Kontakt (5) in der Nähe des ersten Kontakts (4) angeordnet ist, wobei die Verbindungseinrichtung (1) ferner Verrieglungsmittel (25) enthält, die den ersten und zweiten Kabelschuh (13, 16) zusammen an der Anschlussklemme (6) gegen die zugehörigen Kontakte (4, 5) verriegeln können, **gekennzeichnet durch** erste Isolationsmittel (20) zwischen dem ersten Kontakt (4) und dem zweiten Kontakt (5) zur gegenseitigen elektrischen Isolierung der Kontakte (4, 5), und **durch** zweite Isolationsmittel (26) zwischen dem ersten Kabelschuh (13) und dem zweiten Kabelschuh (16) zur gegenseitigen elektrischen Isolierung der Kabelanschlüsse (13, 16).

2. Verbindungseinrichtung nach Anspruch 1, **dadurch gekennzeichnet, dass** die Verriegelungsmittel (25) ein Schutzelement (26) für den ersten Kabelschuh (13) enthalten, welches aus einem isolierenden Material ausgebildet ist und die zweiten Isolationsmittel bildet, wobei der zweite Kabelschuh (16) gegen den zweiten Kontakt (5) durch den ersten Kabelschuh (13) unter Zwischenlage des Schutzelements (26) zwischen dem ersten Kabelschuh (13) und dem zweiten Kabelschuh (16) verriegelt ist.

3. Verbindungseinrichtung nach Anspruch 1 oder Anspruch 2, **dadurch gekennzeichnet, dass** der erste Kontakt (4) durch einen Gewindeschaft (7) gebildet ist, welcher von einem Gehäuse (8) der Vorrichtung abragt, wobei der zweite Kontakt (5) durch eine Leiterbahn (9) gebildet ist, die an einer Oberfläche (10) des Gehäuses (8) den Gewindeschaft (7) umgebend angeordnet ist.

4. Verbindungseinrichtung nach Anspruch 3, **dadurch gekennzeichnet, dass** die Leiterbahn (9) als konzentrischer Ring um den Schaft (7) geformt und mit einem Installationsauslass der Vorrichtung verbunden ist.

5. Verbindungseinrichtung nach Anspruch 3 und Anspruch 4, **dadurch gekennzeichnet, dass** der erste und zweite Kabelschuh (13, 16) so geformt sind, dass sie jeweils Ösen (14, 17) bilden, und an betreffenden Enden (12, 18) des ersten und zweiten elektrischen Kabels (2, 3) befestigt sind, die für die elektrische Verbindung mit dem ersten und zweiten Kontakt (4, 5) bestimmt sind, wobei die Öse (14) des ersten Kabelschuhs (13) einen inneren Durchmesser aufweist, der im wesentlichen gleich demjenigen des Gewindeschafts (7) ist, so dass sie mit leichtem Spiel auf letzteren aufgesetzt werden kann, wobei die Öse (17) des zweiten Kabelschuhs (16) einen inneren Durchmesser hat, der größer als derjenige der Öse (14) des ersten Kabelschuhs (13) ist, derart, dass sie wenigstens teilweise auf der Leiterbahn (9) liegt, sobald der zweite Kabelschuh (16) auf den Gewindeschaft (7) aufgesetzt ist.

6. Verbindungseinrichtung nach Anspruch 5, **dadurch gekennzeichnet, dass** das Schutzelement (26) einen im wesentlichen zylindrischen Abschnitt (27) longitudinal im Abstand von einem seitlichen Durchgangsloch (28) enthält, wobei der zylindrische Abschnitt (27) eine Grundplatte (31) aufweist, die mit einem Durchgangsloch (32) versehen ist, welches mit Spiel von dem Gewindeschaft (7) erfasst werden kann, wobei die Grundplatte (31) axial zwischen dem ersten und zweiten Kabelschuh (13, 16) zwischengelegt ist und in der Lage ist, sie elektrisch zu isolieren.

7. Verbindungseinrichtung nach Anspruch 5 oder Anspurch 6, **dadurch gekennzeichnet, dass** die Verriegelungsmittel (25) eine erste (22) und zweite (34) Mutter aufweisen, die auf den Gewindeschaft (7) geschraubt werden können, wobei die Öse (14) des ersten Kabelschuhs (13) zwischen den Muttern (22, 34) verriegelt ist und so mit dem Gewindeschaft (7) in elektrischer Berührung steht.

## Revendications

1. Système (1) pour la connexion de câbles électriques à un appareil électrique, en particulier au moteur de démarreur d'un véhicule automobile, comprenant une borne de conducteur (6) du dit appareil, une première borne de câble (13) d'un premier câble électrique (2) connecté à un premier contact (4) de la dite borne de conducteur (6), et une deuxième borne de câble (16) d'un deuxième câble électrique (3) connectée à un deuxième contact (5) du dit appareil ; le dit deuxième contact (5) étant disposé près du dit. contact (4) ; le dit système de connexion (1) incluant en outre un moyen de blocage (25) qui peut bloquer ensemble les dites première et deuxième bornes de câble (13, 16) à la dite borne de conducteur (6) contre les contacts associés (4, 5) ;
**caractérisé en ce qu'**il comprend en outre un premier moyen isolant (20) entre le dit premier contact (4) et le dit deuxième contact (5) pour isoler électriquement les dits contacts (4, 5) l'un de l'autre ; et un deuxième moyen isolant (26) entre la dite première borne de câble (13) et la dite deuxième borne de câble (16) pour isoler électriquement les dites bornes de câble (13, 16) l'une de l'autre.

2. Système de connexion selon la revendication 1, **caractérisé en ce que** le dit moyen de blocage (25) comprend un élément de protection (26) de la dite première borne de câble (13), formé en une matière isolante et constituant le dit deuxième moyen isolant ; la dite deuxième borne de câble (16) étant bloquée sur le dit deuxième contact (5) par la dite première borne de câble (13), le dit élément de protection (26) étant interposé entre la dite première borne de câble (13) et la dite deuxième borne de câble (16).

3. Système de connexion selon la revendication 1 ou la revendication 2, **caractérisé en ce que** le dit premier contact (4) est constitué par une tige filetée (7) qui fait saillie à partir d'un carter (8) du dit appareil, le dit deuxième contact (5) étant constitué par une piste conductrice (9) disposée sur une surface (10) du dit carter (8) et entourant la dite tige filetée (7).

4. Système de connexion selon la revendication 3, **caractérisé en ce que** la dite piste conductrice (9) est en forme d'anneau concentrique autour de la dite tige (7) et elle est connectée à une sortie d'installation du dit appareil.

5. Système de connexion selon la revendication 3 ou la revendication 4, **caractérisé en ce que** les dites première et deuxième bornes de câble (13, 16) sont en forme de cosses respectives (14, 17) et sont fixées solidement aux extrémités respectives (12, 18) des dits premier et deuxième câbles électriques (2, 3) prévus pour connexion électrique avec les dits premier et deuxième contacts (4, 5) ; la dite cosse (14) de la première borne de câble (13) ayant un diamètre intérieur sensiblement égal au diamètre de la dite tige filetée (7) de sorte qu'elle peut être placée sur cette dernière avec un faible jeu ; la dite cosse (17) de la deuxième borne de câble (16) ayant un diamètre intérieur plus grand que celui de la cosse (14) de la dite première borne de câble (13) de façon à se superposer à la dite piste conductrice (9), au moins en partie, une fois que la dite deuxième borne de câble (16) a été placée autour de la dite tige filetée (7).

6. Système de connexion selon la revendication 5, **caractérisé en ce que** le dit élément de protection (26) comprend une partie sensiblement cylindrique (27) longitudinalement espacée d'une ouverture latérale (28), la dite partie cylindrique (27) ayant une plaque de base (31) comportant un trou traversant (32) qui peut recevoir la dite tige filetée (7) avec jeu, la dite plaque de base (31) étant axialement interposée entre les dites première et deuxième bornes de câble (13, 16) et pouvant les isoler électriquement.

7. Système de connexion selon la revendication 5 ou la revendication 6, **caractérisé en ce que** le dit moyen de blocage (25) comprend un premier (22) et un deuxième (34) écrous pouvant se visser sur la dite tige filetée (7), la dite cosse (14) de la première borne de câble (13) étant bloquée entre les dits écrous (22, 34) de façon à être en contact électrique avec la dite tige filetée (7).
